(19) **Europäisches Patentamt**

**European Patent Office**

**Office européen des brevets**

(11) Veröffentlichungsnummer: **0 653 444 A2**

(12) # EUROPÄISCHE PATENTANMELDUNG

(21) Anmeldenummer: **94117185.2**

(22) Anmeldetag: **31.10.94**

(51) Int. Cl.⁶: **C08F 20/42**, C08L 33/20,
C09D 5/44, C08L 101/00,
//(C08L101/00,33:20)

(30) Priorität: **13.11.93 DE 4338878**

(43) Veröffentlichungstag der Anmeldung:
**17.05.95 Patentblatt 95/20**

(84) Benannte Vertragsstaaten:
**AT BE CH DE DK ES FR GB GR IE IT LI LU NL
PT SE**

(71) Anmelder: **HOECHST AKTIENGESELLSCHAFT
Brüningstrasse 50
D-65929 Frankfurt am Main (DE)**

(72) Erfinder: **Holzinger, Ulrich, Dr.
Rosenstrasse 3
D-93077 Bad Abbach (DE)**
Erfinder: **Walkenhorst, Wilfried, Dr.
Veilchenstrasse 15
D-93309 Kelkheim (DE)**

(54) **Verfahren zur Herstellung von feinteiligem Polyacrylnitril.**

㊱ Die Erfindung betrifft ein Verfahren zur Herstellung von feinteiligem Homo- oder Copolymer enthaltend mindestens 50 Gew.-% wiederkehrende Acrylnitril- und/oder Methacrylnitrileinheiten (bezogen auf die eingesetzten Monomeren), umfassend die Maßnahmen:

a) lösen und/oder suspendieren und/oder emulgieren und/oder dispergieren der Monomeren in einer oder mehreren unter den Reaktionsbedingungen inerten Flüssigkeit, wobei

b) die Summe der Monomerkonzentrationen zu Beginn und während der Polymerisation kleiner 10 Gew.-% ist,

c) Einwirken von hohen Scherkräften auf die Polymerisationsmischung vor und während der Polymerisation, so daß die entstehenden Homo- oder Copolymer-Teilchen einen D50%-Wert von kleiner 10$\mu$m aufweisen und

d) Durchführen der Polymerisation in bekannter Weise durch Zusatz eines Polymerisationsstarters.

Das feinteilige Polyacrylnitril eignet sich beispielsweise als Pigmentierungsmittel und organischer Füllstoff sowie als Pigmentersatz in Elektrotauchlacken von Auto- oder Industrie-Lacken, als Mattierungsmittel und/oder färbbares Pigment in Lacken, Kunststoffen, Fasern, Folien, Papier und Pappe, als Adsorbens für Gase und Flüssigkeiten, als Rohmaterial zur Herstellung von Kohlenstoff-Mikroperlen als Füllstoff für Flüssigchromatographie- oder Ionenaustauschersäulen, als Verstärkungs- und/oder Füllstoff für Polymere und als Rohmaterial zur Herstellung von Fasern, Folien und Membranen.

EP 0 653 444 A2

Die vorliegende Erfindung betrifft ein Verfahren zur Herstellung von feinteiligen Homo- oder Copolymeren enthaltend wiederkehrende Acrylnitril- und/oder Methacrylnitrileinheiten.

Es ist bekannt, daß Acrylnitril nach verschiedenen Verfahren polymerisiert werden kann. Für Acrylfasern wird Acrylnitril üblicherweise nach der Lösungs- oder der Suspension-Fällungs-Polymerisation polymerisiert.

Bei der Suspensions-Fällungs-Polymerisation fällt das Polymer üblicherweise als feinteilige Suspension an, die abfiltriert, gewaschen und getrocknet werden kann.

Die Teilchengröße von Acrylnitrilpolymeren wird üblicherweise durch einen sogenannten D-Wert charakterisiert. Der Durchmesser D (p) am Percentilpunkt p und der Medianwert D (50 %) sind folgendermaßen definiert:

Ausgehend von der Volumenverteilung

$$V = \int_{D_{min}}^{D_{max}} v(D_i)dD$$

ist der Durchmesser D (p) dann gegeben, wenn

$$D_i = D\,(p)$$

$$\int v(D_i)dD = p * V.$$

$$D_i = D\,(0\ \%)$$

V ist das Gesamtvolumen der Teilen

$D_i$ ist der Durchmesser der einzelnen Teilchen

$v(D_i)$ ist das Volumen der einzelnen Teilchen

$D_{min} = D\,(0\ \%)$ ist der kleinste Teilchendurchmesser

$D_{max} = D\,(100\ \%)$ ist der größte Teilchendurchmesser

p ist der Percentilwert.

Dabei handelt es sich um eine Charakterisierung eines mittleren Teilchendurchmessers, wobei der aus der Volumenverteilungsfunktion gewonnene maximale Teilchendurchmesser, der zu einem Siebdurchgang von X % führen würde, den sogenannten ΔX-Wert darstellt. So gilt beispielsweise für p = 50 %, daß alle Teilchen mit einem Durchmesser D < D (50 %) zusammen 50 % des Gesamtvolumens (= Median oder Halbwertsdurchmesser) ergeben. (T. Allen "Particle Size Measurement Chapman & Hall Ltd., London Malvern Instruments Ltd. "System 3601 Usermanual" Spring Lane South, Worc WR 14 1 AQ, England; S. 5.1. ff.)

Der D50%-Wert der Teilchengröße liegt bei den gemäß Stand der Technik durchgeführten Suspensions-Fällungs-Polymerisation üblicherweise nicht unter 40 μm.

Weitere an sich bekannte Acrylnitril-Polymerisate sind die SAN-, ABS- und NBR-Copolymeren für deren Herstellung in der Regel eine Emulsionspolymerisation durchgeführt wird. Hierbei wird ein Latex erhalten, der zur Weiterverarbeitung gegebenenfalls erst noch gebrochen werden muß. Die Einzelpartikel dieses Latex sind üblicherweise nicht größer als 0,08 μm, weisen aber eine unregelmäßige Partikelgeometrie auf. Der Acrylnitril-Anteil liegt bei diesen bekannten Copolymeren unter 50 Gew.-%.

Die bisher bekannten Verfahren zur Herstellung von Poly(meth)acrylnitril mit einer Teilchengröße kleiner 10 μm sind aufwendig und zur Herstellung größerer bis technischer Mengen ökonomisch kaum geeignet. So beschreibt JP-A-01/043531 ein Verfahren, bei dem ein grobteiliges Polyacrylnitril-Polymer mit mehr als 80 Gew.-% Acrylnitril in einem geeigneten Lösungsmittel gelöst und anschließend wieder ausgefällt wird. Neben diesem Fällungsverfahren beschreibt DE-A-3,940,781 ein mechanisches Verfahren, bei dem ein grobteiliges Polyacrylnitril-Polymer mit bis zu 94 Gew.-% Acrylnitril in speziellen Mühlen, beispielsweise einer Fließbett-Gegenstrahlmühle oder einer Rührwerkskugelmühle, feingemahlen wird (vergleiche auch Ullmann's Encyclopedia of Industrial Chemistry, 5. Auflage, Band B2, 5-20 bis -34, VCH-Verlag, Weinheim 1988). Beide vorbekannte Verfahren erfordern einen hohen apparativen Aufwand.

Versuche haben gezeigt, daß die Teilchen des gemäß DE-A-3,940,781 gemahlenen Polyacrylnitrils, bei mikroskopischer Betrachtung, gequetschten Plättchen ähneln und die Teilchen des gemäß JP-A-01/043531 ausgefällten Polyacrylnitrils, ebenfalls bei mikroskopischer Betrachtung, eine zerfetzte und zersplissene Oberflächenstruktur haben.

JP-A-04/261404 beschreibt ein Verfahren zur Herstellung von Polyacrylnitril-Teilchen mit einem mittleren Durchmesser von 1-10 $\mu$m. Hierzu wird das Polymerisationsgemisch bestehend aus Acrylnitril-Monomer, Dispersionsstabilisator, einem hydrophilen und einem hydrophoben Lösungsmittel unter Schütteln bei 65°C polymerisiert.

Aus JP-A-02/307909 sind stäbchenförmige Poly(meth)acrylnitril-Teilchen bekannt. Die Herstellung der stäbchenförmigen Teilchen erfolgt durch Polymerisation einer zuvor durch Rühren homogenisierten Suspension der Monomeren in einem Wasser/Polyvinylalkohol-Lösungsmittelgemisch.

Ferner ist aus Ullmann, Bd. 19, (1980), Seite 130 ff. bekannt, daß durch Änderung der Rührdrehzahl während der Suspensions-Fällungs-Polymerisation die Teilchengröße der entstehenden Polymeren beeinflußt werden kann. Durch die vorstehend beschriebene Maßnahme können die Teilchengrößen in einem Bereich von 1000 bis 200 $\mu$m variiert werden. Eine Extrapolation des D50%-Wertes der Teilchengrößen unter 10 $\mu$m ist in Abhängigkeit von der Rührdrehzahl nicht möglich; Teilchengrößen kleiner 200 $\mu$m sind mit üblicherweise erreichbaren Rührdrehzahlen nicht herstellbar.

Es besteht daher die Aufgabe, ein einfaches und möglichst wirtschaftliches Verfahren zur Herstellung von Poly(meth)acrylnitril zu entwickeln, bei dem das Polymer nach der Polymerisation direkt in Form kleiner Teilchen anfällt und wobei die Teilchendurchmesser einen D50%-Wert kleiner 10 $\mu$m aufweisen.

Es wurde nun gefunden, daß es möglich ist, ein Poly(meth)acrylnitril-Pulver mit einem D50%-Wert von kleiner als 10 $\mu$m herzustellen, wenn während der Polymerisation die Gesamt-Monomerkonzentration unter einen für die Polymerisation von Acrylnitril üblichen Bereich abgesenkt wird und gleichzeitig hohe Scherkräfte auf die Polymerisationsmischung einwirken.

Die Erfindung betrifft daher ein Verfahren zur Herstellung von Homo- oder Copolymeren enthaltend mindestens 50 Gew.-% wiederkehrende Acrylnitril- und/oder Methacrylnitrileinheiten, umfassend die Maßnahmen:

a) lösen und/oder suspendieren und/oder emulgieren und/oder dispergieren der Monomeren in einer oder mehreren unter den Reaktionsbedingungen inerten Flüssigkeit, wobei

b) die Summe der Monomerkonzentrationen zu Beginn und während der Polymerisation kleiner 10 Gew.-% ist,

c) Einwirken von hohen Scherkräften auf die Polymerisationsmischung vor und während der Polymerisation, so daß die entstehenden Homo- oder Copolymer-Teilchen einen D50%-Wert von kleiner 10$\mu$m aufweisen und

d) Durchführen der Polymerisation in bekannter Weise durch Zusatz eines Polymerisationsstarters.

Die zu Beginn und während der Polymerisation geringe Monomerkonzentration (kleiner 10 Gew.-%, bezogen auf das Polymerisationsgemisch) ist für den Polymerisations-Fachmann ein unüblicher Bereich, da die Reaktionsgeschwindigkeit bei einer Polymerisation mit einer Monomeranfangskonzentration von kleiner 10 Gew.-% normalerweise sehr gering ist und dadurch nur geringe Ausbeuten und Raum-Zeit-Umsätze erzielt werden können.

Wie sich überraschenderweise gezeigt hat, wird bei der Polymerisation und Copolymerisation von Acrylnitril und/oder Methacrylnitril durch Einwirkung von hohen Scherkräften auf das Polymerisationsgemisch die Reaktionsgeschwindigkeit und die Raum-Zeit-Ausbeute unerwartet hoch. Weiterhin ist die Teilchengrößenverteilung durch die erfindungsgemäßen Maßnahmen über einen weiten Bereich variabel und einstellbar.

Der bevorzugte D50%-Wert der Teilchengröße des feinteiligen Polyacrylnitrils ist kleiner als 10 $\mu$m und größer als 0,1 $\mu$m. Mit Hilfe der Teilchengröße können gegebenenfalls weitere spezielle Eigenschaften wie z. B. die Rheologie und die äußere und innere Oberfläche, gezielt beeinflußt und verändert werden.

Die mit dem erfindungsgemäßen Verfahren hergestellten Acrylnitril- und/oder Methacrylnitril-Polymeren enthalten vorzugsweise 70 Gew.-% wiederkehrende Acrylnitril- und/oder Methacrylnitril-Einheiten. Darüber hinaus können dem Acrylnitril und/oder Methacrylnitril bis zu 30 Gew.-% eines oder mehrere copolymerisationsfähige Monomere zugesetzt werden. Besonders bevorzugt sind Poly(meth)acrylnitril-Polymere mit mindestens 90 Gew.-% wiederkehrende Acrylnitril- und/oder Methacrylnitril-Einheiten.

Beispiele für copolymerisationsfähige Monomere sind Acrylester oder Methacrylester von $C_1$-$C_{22}$-Alkoholen, z. B. Methylacrylat, Methylmethacrylat, Butylmethacrylat, Octylmethacrylat, Ethylacrylat, Isobutylacrylat, (Meth)Acrylester von perfluorierten $C_1$-$C_{22}$-Alkoholen; Vinylaromaten mit bis zu 20 C-Atomen, z. B. Styrol, Vinyltoluol; die Ester der Maleinsäure und der Fumarsäure mit $C_1$-$C_{22}$-Alkoholen; Vinylchlorid,

Vinylacetat, Ethylen und Butadien, bevorzugt ist Methylacrylat.

Des weiteren können beispielsweise ungesättigte Carbon-, Sulfon- und Phosphonsäuren und ihre Ester und Salze als Comonomere eingesetzt werden wie beispielsweise Acrylsäure, Crotonsäure, Itaconsäure, Vinylsulfonsäure, (Meth)Acrylsulfonsäure, Styrolsulfonsäure, Acrylamidomethylpropansulfonsäure, Vinylphosphonsäure und deren Ester.

Zu den geeigneten Comonomeren gehören ebenfalls ungesättigte primäre, sekundäre und/oder tertiäre Amine wie Dimethylaminoneopentylmethacrylat, Dimethylaminomethylneopentylacrylat, 2-N-Morpholinoethylmethacrylat, 2-N-Morpholinoethylacrylat oder auch Amide der Acryl- oder Methacrylsäure, wie Acrylamid, Dimethylmethacrylamid oder Methylbutylacrylamid.

Zusätzlich können auch andere funktionelle Monomere, die mit Acrylnitril und/oder Methacrylnitril copolymerisierbar sind, eingesetzt werden. Die funktionellen Monomere können Hydroxy-, Silan- oder Epoxidgruppen enthalten. Beispiele dafür sind Vinyl-trimethoxysilan, Vinyl-tributoxysilan, Methacryloxypropyltrimethoxysilan, Vinyl-tris-(methoxyethoxy)-silan, Vinyl-triacetoxysilan, Hydroxyethylmethacrylat, Hydroxybutylmethacrylat, Glycidylacrylat, Glycidylmethacrylat oder auch 2-Hydroxyethylacrylat.

Durch die Wahl der einzusetzenden Monomeren können Eigenschaften wie z. B. die Glasübergangstemperatur, Härte, Sprödigkeit beeinflußt werden.

Der Begriff Polymerisation steht insbesondere für Fällungspolymerisationen bei denen die Monomeren zuvor in einer oder mehreren gegenüber dem Monomeren und Polymeren inerten Flüssigkeiten gelöst und/oder suspendiert und/oder emulgiert und/oder dispergiert werden. Vorzugsweise wird das erfindungsgemäße Verfahren nach der Suspensions-FällungsPolymerisationstechnik durchgeführt.

Die während der Polymerisation notwendige Scherkraft wird üblicherweise durch ein oder mehrere Rührwerkzeuge und/oder andere, hohe Scherung erzeugende Dispergiereinrichtungen die gleichzeitig und/oder nacheinander eingesetzt werden können erzeugt. Beispiele hierfür sind Propeller-, Impeller-, Turbinen-, Leitstrahl-, Schrägblatt-, Zahnscheiben-(Dissolver)- oder Stiftscheiben-(Dissolver)-Rührer mit und ohne Stromstörer. Ebenso sind alle Arten von statischen und dynamischen Mischern als auch Jet-Strom-Mischer als Dispergiereinrichtung möglich. Unter Jet-Strom-Mischern werden Mischer verstanden, welche die Polymerisationsmischungen durch Verdüsen vermischen. Bevorzugt werden Rührer nach dem Rotor-/Stator-Prizip wie Rührer des Typs ®Ultra-Turrax (Firma Janke & Kunkel, Staufen, DE) oder Rührer des Typs ®Pentax (Firma Bran & Lübbe, Hamburg, DE).

Darüber hinaus kann die Dispergierung auch durch in den Reaktor eingebaute Einrichtungen und/oder durch (Zwangs)Umwälzung ("inline") außerhalb des Reaktors erfolgen.

Die Polymerisationsreaktion kann chargenweise, halb-kontinuierlich und kontinuierlich erfolgen.

Als Reaktoren für das kontinuierliche Polymerisationsverfahren eignen sich beispielsweise der kontinuierliche Rührkesselreaktor, eine Kaskade aus 2 bis 4 Reaktoren, der Rohrreaktor oder der Schlaufenreaktor oder beliebige Kombinationen aus den genannten Reaktoren.

Als unter den Reaktionsbedingungen inerte Flüssigkeiten sind protische und/oder aprotische Lösungs- und/oder Nichtlösungsmittel und deren Mischungen geeignet. Von den aprotischen Lösungsmittels sind, sowohl die unpolaren, wie aliphatische und aromatische Kohlenwasserstoffe, als auch die polaren wie Halogenkohlenwasserstoffe, Dimethylformamid, Dimethylsulfoxid, Dimethylacetamid und Acetonitril geeignet. Als protische Reaktionsmedien eignen sich beispielsweise Wasser und Alkohole.

Die Summe der Monomerkonzentration zu Beginn und während der Polymerisation beträgt maximal 10 Gew.-%, bevorzugt 1 bis 10 Gew.-%, besonders bevorzugt 3 bis 8 Gew.-%.

Das Molekulargewicht des Poly(meth)acryl-Polymeren kann in üblicher Weise durch die Wahl des Radikalstarters und durch dem Fachmann bekannte Polymerisationsvariable, wie Initiatorkonzentration und/oder Polymerisationstemperatur eingestellt werden. Das Molekulargewicht $M_w$ (Gewichtsmittel) des mit dem erfindungsgemäßen Verfahren hergestellten Poly(meth)acrylnitril-Polymeren beträgt üblicherweise 3 x $10^4$ bis 8 x $10^5$ g/mol, bevorzugt 5 x $10^4$ bis 4,5 x $10^5$ g/mol. Gegebenenfalls kann das Molekulargewicht mit Hilfe eines Kettenreglers, wie 2-Mercaptoethanol, geregelt werden. Das Molekulargewicht $M_w$ wird nach Fikentscher (Makromol. Chem. 57 1962, 52) durch die Beziehung

$$[\eta] = 1,78 \times 10^{-4} \times Mw^{0,78}$$

worin $\eta$ für die Viskositätszahl (intrinsic viscosity) steht, bestimmt.

Als Polymerisationsstarter können sowohl wasserlösliche Verbindungen, wie beispielsweise $H_2O_2$, Kaliumperoxodisulfat und organische Azo- und Peroxoverbindungen als auch in Wasser schwerlösliche Verbindungen, wie beispielsweise Azoisobuttersäurenitril oder andere Azo- und Peroxoverbindungen verwendet werden. Als Radikalstarter wird das Redoxsystem Kaliumperoxodisulfat und Natriumbisulfit besonders bevorzugt.

4

EP 0 653 444 A2

Zum Polymerisationsansatz kann zusätzlich ein Emulgator zugegeben werden. Dadurch kann die Teilchengröße des Polymerisates noch weiter reduziert werden oder es können ihm spezielle Eigenschaften, wie beispielsweise eine besonders gute Eignung für kathodisch abscheidbare Überzugsmassen verliehen werden.

Geeignete Emulgatoren sind:

Kationische Tenside, wie Cetylaminhydrochlorid und Salze anderer Fettamine mit starken Säuren;

Nicht ionogene Emulgatoren, wie Fettalkoholethoxylate und Alkylphenolethoxylate, wie beispielsweise die ®Genapol-Typen (Hoechst AG); Anionische Tenside, wie Natriumlaurylsulfat und andere Alkylsulfate und Alkylbenzolsulfonate.

Die Polymerisation kann auch mit Schutzkolloiden als Dispergatoren durchgeführt werden. Geeignete Dispergatoren sind beispielsweise Stärke, Na-Salz der Carboxymethylcellulose, Methylcellulose, Polyvinylalkohol oder teilverseiftes Polyvinylacetat.

Die Reaktionstemperatur für die Polymerisation beträgt üblicherweise 30-75 °C, bevorzugt 40-60 °C, die Polymerisationszeit beträgt in der Regel zwischen 30 Minuten und 5 Stunden und ist von der Reaktionsführung bzw. Polymerisationstemperatur ebenso wie von den Monomeren, dem Lösungsmittel, den Startersubstanzen und dem jeweils gewählten Polymerisationsverfahren abhängig.

Die erhaltene Polyacrylnitril-Suspension kann nach dem Polymerisieren, beispielsweise destillativ, entmonomerisiert werden. Zuvor oder im Anschluß an die Entmonomerisierung kann die flüssige Phase, beispielsweise durch Filtration oder mit Hilfe einer Zentrifuge, größtenteils entfernt werden. Durch Nachwaschen mit Wasser und nochmaliges Filtrieren oder Zentrifugieren kann die Polymersuspension von störenden Salzen und anderen Reststoffen befreit werden. Anschließend kann das noch Restwasser enthaltende feinteilige Poly(meth)acrylnitril-Polymere getrocknet werden, wobei darauf zu achten ist, daß die Teilchen nicht Agglomerieren. Geeignete Trockner sind beispielsweise Sprühtrockner und Scheibenzerstäubungstrockner.

Die Partikeloberfläche der nahezu rundlichen Teilchen kann, bei mikroskopischer Betrachtung, als eine vergleichbar Himbeerartige-Struktur beschrieben werden, bei der auf der Oberfläche des nahezu runden Polymer-Teilchens weitere runde Polymer-Teilchen sitzen. Das Polymer-Teilchen ist dadurch im Gegensatz zum gemahlenen oder ausgefällten Polymer nahezu rund (sphärische Kugelgeometrie) und hat eine große spezifische Oberfläche.

Das feinteilige Polymer eignet sich beispielsweise als Pigmentierungsmittel und organischer Füllstoff. Speziell als Pigmentersatz anstelle von Titandioxid in Elektrotauchlacken von Auto- oder Industrie-Lacken zeigt das Polymer viele Anwendungsmöglichkeiten. Darüber hinaus kann das erfindungsgemäße feinteilige Polymer als Mattierungsmittel und färbbares Pigment in Lacken, Kunststoffen, Fasern, Folien, Papier und Pappe eingesetzt werden. Das Polymer besitzt eine sehr große innere und äußere Oberfläche. Es nimmt je nach Partikelgröße mehr als das 5-fache bis mehr als das 10-fache seines Gewichts an Wasser und anderen Flüssigkeiten auf, ohne daß es den schnittfesten, pastösen Aggregatzustand verliert.

Die große Oberfläche bietet auch eine erhöhte Reaktivität für chemische Reaktionen am Polymerkorn, beispielsweise können Gase oder Flüssigkeiten adsorbiert werden.

Die gute Flüssigkeitsaufnahme- und Speicher-Kapazität des Polymers kann bei der Verwendung als Adsorptions- und Bindemittel ausgenutzt werden. Des weiteren kann es als Thixotropiehilfsmittel und Eindickungsmittel in Lacken, Kunststoffen oder ähnlichem eingesetzt werden.

Darüber hinaus kann das Polymer als Rohmaterial für (Kohlenstoff-) Mikroperlen, als Füllstoff für Flüssigchromatographie- oder Ionenaustauschersäulen, als Verstärkungs- und Füllstoff für Polymere oder als Ausgangsmaterial für polymeranaloge Umsetzungen verwendet werden. Ebenso kann es auch als Ausgangsstoff für Fasern, Folien und Membranen eingesetzt werden.

Die folgenden Ausführungsbeispiele veranschaulichen die vorliegende Erfindung ohne diese zu beschränken.

Beispiele:

In den folgenden Beispielen werden die Partikelgrößenverteilungen mit einem Malvern Partikelsizer Modell 3600 gemessen.

Der Polymerisationsstart erfolgte in den nachfolgend beschriebenen Beispielen durch Zugabe der Lösungen I und II.

Lösung I wurde aus 50 ml destilliertem Wasser und 0,72 g Kaliumperoxodisulfat und Lösung II wurde aus 50 ml destilliertem Wasser und 2,88 g Natriumdisulfit hergestellt.

EP 0 653 444 A2

Beispiel 1
(Acrylnitril-Polymerisation in wäßrigem Medium; Chargenweises-Verfahren)

In einem Reaktionsgefäß wurde als Vorlage eingetragen:
1520 ml destilliertes Wasser,
180 g destilliertes Acrylnitril,
3,6 mg Mohr'sches Salz,
1,3 ml 99 %ige Ameisensäure.
Nach Durchleiten von Stickstoff und Temperierung auf 55°C startete man durch Zusatz der Lösungen I und II die Polymerisation und dispergierte die Reaktionsmischung mittels eines ®Ultra-Turrax Rührers mit ca. 10000 Umdrehungen pro Minute.

Nach Beendigung der Polymerisation wurde das Wasser und nicht umgesetztes Monomer abgetrennt. Nach 2-fachem Waschen mit destilliertem Wasser erhielt man eine Polymersuspension, die eine Leitfähigkeit kleiner 10 $\mu$S/cm (gemessen als 10 %ige Suspension in destilliertem Wasser mit einer Eigenleitfähigkeit von maximal 0,1 $\mu$S/cm) besitzt und deren Eigenschaften in Tabelle 1 angegeben sind. Die Ausbeute an Polymeren betrug 79,3 % der Theorie.

Beispiel 2 bis Beispiel 4

Die Versuche erfolgten gemäß Beispiel 1. Die Einwaagen sind ebenso wie die Ergebnisse aus Tabelle 1 ersichtlich.

Beispiel 5

Der Versuch erfolgte gemäß Beispiel 1. Als Rührer wurde jedoch ein Dissolverrührer mit 150 mm Durchmesser und 1500 Umdrehungen pro Minute verwendet. Die Ergebnisse sind aus Tabelle 1 ersichtlich.

Beispiel 6

Der Versuch erfolgte gemäß Beispiel 1. Als Rührer im Reaktor wurde jedoch ein Propellerrührer mit 80 mm Durchmesser und 500 Umdrehungen pro Minute verwendet. Das Dispergieren der Reaktionsmischung erfolgte durch Umpumpen der Reaktionsmischung durch eine Durchlaufkammer mit einem "inline" geschalteten ®Ultra-Turrax Rührer, der mit ca. 10000 U/min betrieben wurde. Die Umpump-Förderleistung betrug ca. 1800 mg/min. Die Ergebnisse sind aus Tabelle 1 ersichtlich.

Beispiel 7
(Halbkontinuierliches-Zulaufverfahren)

Die eingesetzten Mengen entsprechen den Mengen in Beispiel 1. Es wurde jedoch nur die Hälfte der Reaktionsmischung vorgelegt und mittels eines ®Ultra-Turrax Rührers bei ca. 10000 Umdrehungen pro Minute dispergiert. Nach dem Starten mit je 25 ml der Lösung I und II wurden die restlichen Lösungen innerhalb von einer Stunde gleichzeitig zur Vorlage dosiert. Die Ergebnisse sind aus Tabelle 1 ersichtlich.

Beispiel 8
(kontinuierliche Polymerisation)

Die eingesetzten Mengen entsprechen den Mengen in Beispiel 1. Es wurden 1700 ml der Reaktionsmischung vorgelegt und mittels eines ®Ultra-Turrax Rührers bei ca. 10000 Umdrehungen pro Minute dispergiert. Nach dem Starten mit je 50 ml Lösung I und II wurden jedoch jeweils pro Stunde, 50 ml der Lösungen I und II und sowie 1700 g der Reaktionsmischung, so wie sie auch zu Beginn der Reaktion vorgelegt wurde, gleichzeitig zur Vorlage dosiert und kontinuierlich ein Austrag von 1800 g pro Stunden entnommen. Nach der Gleichgewichtseinstellung wurde mit der Probenahme begonnen. Die Ergebnisse sind aus Tabelle 1 ersichtlich.

Beispiel 9

Der Versuch erfolgte gemäß Beispiel 1. Zusätzlich wurden jedoch noch 5,4 g des Emulgators ®Genapol GX 110 zur Reaktionsmischung zugesetzt. Die Ergebnisse des Versuchs sind aus Tabelle 1 ersichtlich.

6

Beispiel 10

In ein Reaktionsgefäß wurden als Vorlage eingetragen.
1500 ml destilliertes Wasser,
70 g destilliertes Acrylnitril.
Nach Durchleiten von Stickstoff und Temperierung auf 70°C startete man mit 1,5 g Azoisobuttersäuredinitril (AIBN) gelöst in 5 ml Acrylnitril. Die Reaktionsmischung wurde während der gesamten Polymerisation mittels eines ®Ultra-Turrax Rührers bei ca. 10000 Umdrehungen pro Minute dispergiert. Nach 2 Stunden Reaktionszeit betrug der Teilchendurchmesser (D50%-Wert) 5,50 $\mu$m und die Ausbeute 38,3 % der Theorie.

Vergleichsbeispiel 1:

Der Versuch erfolgte wie in Beispiel 1 beschrieben. Als Rührer wurde jedoch ein Propellerrührer (ohne Stromstörer) mit 150 mm Durchmesser und 1500 Umdrehungen pro Minute verwendet. Die Ergebnisse sind aus Tabelle 1 ersichtlich.

Vergleichsbeispiel 2:

Der Versuch erfolgte wie in Beispiel 1 beschrieben. Die Monomereinwaage betrug jedoch 337,5 g. Die Reaktionsmischung wurde mittels eines ®Ultra-Turrax Rührers bei ca. 10000 Umdrehungen pro Minute dispergiert. Die Ergebnisse sind aus Tabelle 1 ersichtlich.

Tabelle 1:

| Beispiel | Einwaage | | | | Teilchengröße D50%-Wert [µm] | Ausbeute [%] |
|---|---|---|---|---|---|---|
| | Monomer [g] | K-Persulfat [g] | Na-Disulfit [g] | Wasser [ml] | | |
| 1 | 180,0 | 0,72 | 2,88 | 1620,0 | 4,70 | 79,3 |
| 2 | 135,0 | 0,54 | 2,16 | 1665,0 | 3,79 | 76,7 |
| 3 | 112,5 | 0,45 | 1,80 | 1687,5 | 3,97 | 64,0 |
| 4 | 90,0 | 0,36 | 1,44 | 1710,0 | 2,34 | 38,0 |
| 5 | 135,0 | 0,54 | 2,16 | 1665,0 | 4,37 | 50,6 |
| 6 | 135,0 | 0,54 | 2,16 | 1665,0 | 4,18 | 55,2 |
| 7 | 135,0 | 0,54 | 2,16 | 1665,0 | 3,72 | 69,1 |
| 8 | 135,0 | 0,54 | 2,16 | 1665,0 | 4,70 | 46,5 |
| 9 | 135,0 | 0,54 | 2,16 | 1665,0 | 3,01 | 62,5 |
| Vergleich 1 | 135,0 | 0,54 | 2,16 | 1665,0 | 20,52 | 53,5 |
| Vergleich 2 | 337,5 | 1,35 | 5,40 | 1462,5 | 11,81 | 85,0 |

## Patentansprüche

1. Verfahren zur Herstellung von Homo- oder Copolymeren enthaltend mindestens 50 Gew.-% wiederkehrende Acrylnitril- und/oder Methacrylnitrileinheiten, umfassend die Maßnahmen:

a) lösen und/oder suspendieren und/oder emulgieren und/oder dispergieren der Monomeren in einer oder mehreren unter den Reaktionsbedingungen inerten Flüssigkeit, wobei
b) die Summe der Monomerkonzentrationen zu Beginn und während der Polymerisation kleiner 10 Gew.-% ist,
c) Einwirken von hohen Scherkräften auf die Polymerisationsmischung vor und während der Polymerisation, so daß die entstehenden Homo- oder Copolymer-Teilchen einen D50%-Wert von kleiner 10μm aufweisen und
d) Durchführung der Polymerisation in bekannter Weise durch Zusatz eines Polymerisationsstarters.

2. Verfahren gemäß Anspruch 1 dadurch gekennzeichnet, daß das Acrylnitril- und/oder Methacrylnitril-Polymere mindestens 70 Gew.-%, vorzugsweise mindestens 90 Gew.-%, wiederkehrende Acrylnitril- und/oder Methacrylnitril-Einheiten enthält.

3. Verfahren gemäß Anspruch 1 oder 2, dadurch gekennzeichnet, daß der D50%-Wert kleiner als 10 μm und größer als 0,1 μm ist.

4. Verfahren gemäß einem oder mehreren der Ansprüche 1 bis 3, dadurch gekennzeichnet, daß die Summe der Monomerkonzentrationen zu Beginn und während der Polymerisation zwischen 1 und 10 Gew.-%, vorzugsweise zwischen 3 und 8 Gew.-% beträgt.

5. Verfahren gemäß einem oder mehreren der Ansprüche 1 bis 4, dadurch gekennzeichnet, daß die Polymerisationstemperaturen zwischen 30 und 75°C und die Polymerisationszeit zwischen 5 Stunden und 30 Minuten beträgt.

6. Verfahren gemäß einem oder mehreren der Ansprüche 1 bis 5, dadurch gekennzeichnet, daß zum Polymerisationsansatz zusätzlich ein kationisches Tensid, ein nicht ionogener Emulgator oder ein anionisches Tensid oder Mischungen Derselben, zugegeben wird.

7. Verfahren gemäß einem oder mehreren der Ansprüche 1 bis 6, dadurch gekennzeichnet, daß die Polymerisationsreaktion chargenweise, halbkontinuierlich oder kontinuierlich erfolgt.

8. Homo- oder Copolymere enthaltend mindestens 50 Gew.-% wiederkehrende Acrylnitril- und/oder Methacrylnitrileinheiten erhältlich nach dem Verfahren gemäß Anspruch 1.

9. Verwendung des nach dem Verfahren gemäß einem oder mehreren der Ansprüche 1 bis 7 erhaltenen Homo- oder Copolymeren als Pigmentierungsmittel und organischer Füllstoff sowie als Pigmentersatz in Elektrotauchlacken von Auto- oder Industrie-Lacken.

10. Verwendung des nach dem Verfahren gemäß einem oder mehreren der Ansprüche 1 bis 7 erhaltenen Homo- oder Copolymeren als Mattierungsmittel und/oder färbbares Pigment in Lacken, Kunststoffen, Fasern, Folien, Papier und Pappe

11. Verwendung des nach dem Verfahren gemäß einem oder mehreren der Ansprüche 1 bis 7 erhaltenen Homo- oder Copolymeren als Adsorbens für Gase und Flüssigkeiten.

12. Verwendung des nach dem Verfahren gemäß einem oder mehreren der Ansprüche 1 bis 7 erhaltenen Homo- oder Copolymeren Rohmaterial zur Herstellung von Kohlenstoff-Mikroperlen als Füllstoff für Flüssigchromatographie- oder Ionenaustauschersäulen.

13. Verwendung des nach dem Verfahren gemäß einem oder mehreren der Ansprüche 1 bis 7 erhaltenen Homo- oder Copolymeren als Verstärkungs- und/oder Füllstoff für Polymere.

14. Verwendung des nach dem Verfahren gemäß einem oder mehreren der Ansprüche 1 bis 7 erhaltenen Homo- oder Copolymeren als Rohmaterial zur Herstellung von Fasern, Folien und Membranen.